# EUROPÄISCHE PATENTSCHRIFT

(11) **EP 3 369 990 B1**
(45) Veröffentlichungstag und Bekanntmachung des Hinweises auf die Patenterteilung: **16.02.2022**
(21) Anmeldenummer: 17158814.8
(22) Anmeldetag: 02.03.2017
(51) Int. Cl.: F21V 27/00, H02G 11/02, B65H 75/44, F21V 33/00, B65H 75/40, B65H 75/34, F21V 21/30, F21Y 115/10, F21W 131/40

(54) **LEITUNGSROLLER**
CABLE REEL
ENROULEUR DE CABLES

(43) Veröffentlichungstag der Anmeldung: 05.09.2018
(73) Patentinhaber: Schmidt, Dennis, 21465 Wentorf (DE)
(72) Erfinder: Schmidt, Dennis, 21465 Wentorf (DE)
(74) Vertreter: Glawe, Delfs, Moll

(56) Entgegenhaltungen:
- EP-A1- 1 923 975
- CN-A- 104 843 548
- CN-U- 201 825 603
- DE-A1- 19 526 544
- US-A- 3 870 133

## Beschreibung

Die Erfindung betrifft einen Leitungsroller mit einer drehbar gelagerten Trommel zum Aufrollen einer elektrischen Verlängerungsleitung.

Entsprechende Leitungsroller für Verlängerungsleitungen - im allgemeinen Sprachgebrauch auch Kabeltrommel genannt - sind aus dem Stand der Technik bekannt. Die elektrische Verlängerungsleitung ist dabei mit ihrem einen Ende fest mit der Trommel verbunden und weist an ihrem anderen, freien Ende einen Stecker, in der Regel ein SchuKo-Stecker Typ F, auf. An dem Leitungsroller selbst sind Kupplungen (Steckdosen) angeordnet, die mit der Verlängerungsleitung elektrisch verbunden sind.

Die Kupplungen können dabei unmittelbar an der Trommel oder aber an einem anderen Bauteil wie Gehäuse oder Dreieckständer des Leitungsrollers, gegenüber dem die Trommel drehbar gelagert ist, angeordnet sein. Je nach Anordnung drehen sich die Kupplungen mit der Trommel mit oder nicht. Es können beliebige Geräte an dem Leitungsroller angeschlossen werden, die jedoch jeweils gesondert von dem Leitungsroller ausgebildet sind und jeweils eigene Anschlusskabel aufweisen.

Im Stand der Technik sind Leitungsroller bekannt, die neben den beschriebenen Kupplungen noch weitere, für bestimmte Anwendungszwecke hilfreiche Anschlüsse aufweisen, sodass auf gesonderte Geräte teilweise verzichtet werden kann. So ist aus dem deutschen Gebrauchsmuster DE 7 618 212 U1 eine Universalkabelrolle für KFZ- und Landmaschinenwerkstätten bekannt, die neben üblichen Kupplungen noch eine 12V-Bordspannungssteckdose, bspw. für eine daran anzuschließende Handlampe, eine 12V-Anhängersteckdose nebst Bremslicht- und Blinkerprüfschalter und einen Lampenprüfwinkel aufweist. Zur Versorgung der genannten weiteren Anschlüsse mit geeigneter Spannung umfasst die Universalkabelrolle einen Transformator.

Der Anwendungsbereich der Universalkabelrolle gemäß dem deutschen Gebrauchsmuster DE 7 618 212 U1 ist stark limitiert auf KFZ- und Landmaschinenwerkstätten. Zusätzliche Leitungsroller des Stands der Technik sind in CN 201 825 603 U und US 3 870 133 zu finden.

Aufgabe der vorliegenden Erfindung ist es, einen Leitungsroller zu schaffen, der für einen weiten Anwendungsbereich vorteilhaft ist.

Gelöst wird diese Aufgabe durch einen Leitungsroller gemäß dem Hauptanspruch. Vorteilhafte Weiterbildungen ergeben sich aus den abhängigen Ansprüchen.

Die Erfindung hat erkannt, dass für ein breites Anwendungsspektrum von Leitungsrollern regelmäßig eine Lichtquelle an den an einem Leitungsroller angeordneten Kupplungen angeschlossen wird. Dies ist auch nicht weiter verwunderlich, da Leitungsroller regelmäßig dort zum Einsatz kommen, wo eine (funktionierende) Steckdose nicht in unmittelbarer Näher zur Verfügung steht. Häufig ist an Orten ohne (funktionierende) Steckdose aber auch kein (funktionierendes) elektrisches Licht vorhanden. So werden Leitungsroller bspw. häufig bei Renovierungen eingesetzt, bei denen aus Gründen der Sicherheit in einzelnen Räumen oder Etagen der Strom abgestellt ist. Auch bei der Verwendung elektrischer Geräte in Garagen, Gartenhäusern oder Geräteschuppen können Leitungsroller aufgrund mangelnder Steckdosen zum Einsatz kommen.

Bei den beispielhaft beschriebenen sowie weiteren Anwendungsszenarien wird regelmäßig zusätzlich zu den eigentlich zu verwendenden und an die Kupplungen des Leitungsrollers anzuschließenden Geräten eine Lichtquelle benötigt. Diese ist im Stand der Technik grundsätzlich gesondert von dem Leitungsroller ausgeführt und wird mit einem Anschlusskabel an dem Leitungsroller angeschlossen. Dabei wird durch die Lichtquelle eine Kupplung des Leitungsrollers belegt und steht für andere Geräte nicht mehr zur Verfügung. Außerdem benötigt die Lichtquelle - je nach Bauart - eine gesonderte Aufstellfläche oder Aufhängungsmöglichkeit.

Diese Nachteile werden bei dem erfindungsgemäßen Leitungsroller vermieden. Indem der Leitungsroller bereits eine Leuchte aufweist, muss weder eine separate Leuchte vorgesehen sein noch wird dadurch eine Kupplung des Leitungsrollers belegt. Auch ist neben der Aufstellfläche für den Leitungsroller keine gesonderte Aufstellfläche oder eine Aufhängungsmöglichkeit erforderlich.

Die Leuchte ist an einer Stirnseite des Leitungsrollers angeordnet und unlösbar oder lösbar mit diesem verbunden. Im je nach Art der Verbindung dauerhaft oder wenigstens zweitweise verbundenen Zustand der Leuchte mit dem Leitungsroller wird die Leuchte über die Verlängerungsleitung mit elektrischer Energie versorgt Ist also der Stecker am freien Ende der Verlängerungsleitung in eine stromführende Kupplung eingeführt, wird die Leuchte mit durch die Verlängerungsleitung geleiteter elektrischer Energie betrieben. Im Falle einer lösbaren Verbindung ist eine entsprechende Energieversorgung selbstverständlich nur dann möglich, wenn die entsprechende Verbindung besteht.

Die Leuchte kann fest an dem Leitungsroller befestigt sein, bspw. an der Trommel selbst oder an dem die drehbare Lagerung der Trommel ermöglichenden Lagerbock. Erfindungsgemäss wird die Leuchte mit einer Halterung an dem Leitungsroller befestigt ist, die ein Herausziehen der Leuchte aus dem Leitungsroller in Richtung der Achse der Trommel und/oder ein Verschwenken der Leuchte um wenigstens eine Achse senkrecht zur Achse des Leitungsrollers ermöglicht. Dadurch ist es möglich, die Leuchte in weiten Teilen unabhängig von der Position und Lage des Leitungsrollers auszurichten. Ist die Leuchte aus dem Leitungsroller in Richtung der Achse der Trommel herausziehbar ausgestaltet, lässt sich dadurch der Schwenkbereich der Leuchte regelmäßig vergrößern. Die Halterung kann selbst aus dem Leitungsroller herausziehbar ausgestaltet sein. Dies bietet den Vorteil, dass die Halterung im eingefahrenen Zustand der Leuchte nicht aus dem Leitungsroller hervorsteht.

Die Leuchte bleibt auch nach dem Herausziehen und/oder Verschwenken weiterhin mit über die Verlängerungsleitung mit elektrischer Energie versorgbar. In anderen Worten soll die Halterung derart ausgebildet sein, dass die Leuchte auch dann mit elektrischer Energie von der Verlängerungsleitung versorgt werden kann, wenn die Leuchte herausgezogen und/oder verschwenkt wird. Hierzu können bspw. Kabel geeignet an oder in der Halterung geführt werden.

Um zu verhindern, dass sich die Ausrichtung der Leuchte verändert, wenn die Trommel der Leitungsrolle gedreht wird, ist es bevorzugt, wenn die Leuchte und/oder die Halterung von der Drehbewegung der Trommel entkoppelt ist. Dies kann bspw. erreicht werden, indem die Leuchte und/oder die Halterung an einem den Lagerbock der Trommel bildenden Element der Leitungsrolle angeordnet ist. Um auch bei entsprechender Entkopplung eine umfangreiche Flexibilität der Ausrichtung der Leuchte zu erreichen, ist bevorzugt, wenn die Leuchte und/oder die Halterung vorzugsweise um eine Achse parallel zur Achse der Trommel drehbar ist. Die Leuchte lässt sich dann ggf. zusammen mit der Halterung um die besagte Achse drehen, um eine gewünschte Ausrichtung der Leuchte zu erreichen, bewegt sich bei einer Drehung der Trommel jedoch nicht mit der Trommel mit.

Die Leuchte kann über Verbindungskabel, Verbindungspins und/oder Induktionsspulen mit elektrischer Energie versorgt werden. Verbindungskabel sind dabei bevorzugt, wenn die Leuchte unlösbar mit dem Leitungsroller verbunden ist. Ist die Leuchte lösbar mit dem Leitungsroller verbunden, sind Verbindungspins oder Induktionsspulen vorteilhaft. Mit Verbindungspins sind dabei aufeinander abgestimmte Kontaktstellen an der entfernbaren Leuchte und dem Leitungsroller bezeichnet, über die beim Einsetzen der Leuchte in den Leitungsroller bzw. dessen dafür vorgesehene Halterung einen elektrischen Kontakt herstellen. Wenigstens ein Teil der Kontaktstellen kann dabei in Form von Pins, vorzugsweise als federnde Pins, ausgestaltet sein. Alternativ können sowohl an der Leuchte als auch an dem Leitungsroller Induktionsspulen vorgesehen sein, mit denen drahtlos Energie von dem Leitungsroller an die Leuchte übertragen werden kann.

Insbesondere wenn die Leuchte lösbar mit dem Leitungsroller verbunden ist, ist bevorzugt, wenn die Leuchte einen aufladbaren Energiespeicher zur Speicherung elektrischer Energie aufweist. Damit kann der Betrieb der Leuchte im von dem Leitungsroller gelösten Zustand gewährleistet werden. Aber auch bei einer unlösbaren Verbindung zwischen Leuchte und Leitungsroller kann ein Energiespeicher vorteilhaft sein. So kann die Leuchte ggf. auch dann betrieben werden, wenn (noch) keine elektrische Energie über die Verlängerungsleitung zur Verfügung steht. In beiden Fällen lässt sich der Energiespeicher vorzugsweise mit über die Verlängerungsleitung zur Verfügung gestellter elektrischer Energie wieder aufladen.

Es ist bevorzugt, wenn die Leuchte einen Schalter zum Ein- und Ausschalten aufweist. Über einen entsprechenden Schalter kann die Leuchte ausgeschaltet werden, wenn sie nicht gebraucht wird. Ist die Leuchte lösbar mit dem Leitungsroller verbunden, befindet sich der Schalter vorzugsweise unmittelbar an der Leuchte selbst, um ein an- und ausschalten der Leuchte auch losgelöst von dem Leitungsroller zu ermöglichen.

Weiter ist bevorzugt, wenn der Leitungsroller ein Netzteil und wenigstens eine darüber mit elektrischer Energie versorgbare Kupplung, vorzugsweise eine USB-Kupplung oder eine 12V-Bordspannungssteckdose, aufweist.

Die Trommel des Leitungsrollers kann vorzugsweise drehbar an einem Dreiecksständer gelagert sein. Die Leuchte ist vorzugsweise eine gerichtete Lichtquelle mit einem feststellbaren Abstrahlwinkel. Als Leuchtmittel werden bevorzugt eine oder mehrere LEDs eingesetzt.

Die Erfindung wird nun anhand einer bevorzugten Ausführungsform unter Bezugnahme auf die beigefügten Zeichnungen beispielhaft beschrieben. Es zeigen:
Figuren 1, 2: ein erstes nicht beanspruchtes Ausführungsbeispiel eines Leitungsrollers und
Figuren 3-5: ein zweites Ausführungsbeispiel eines erfindungsgemäßen Leitungsrollers.

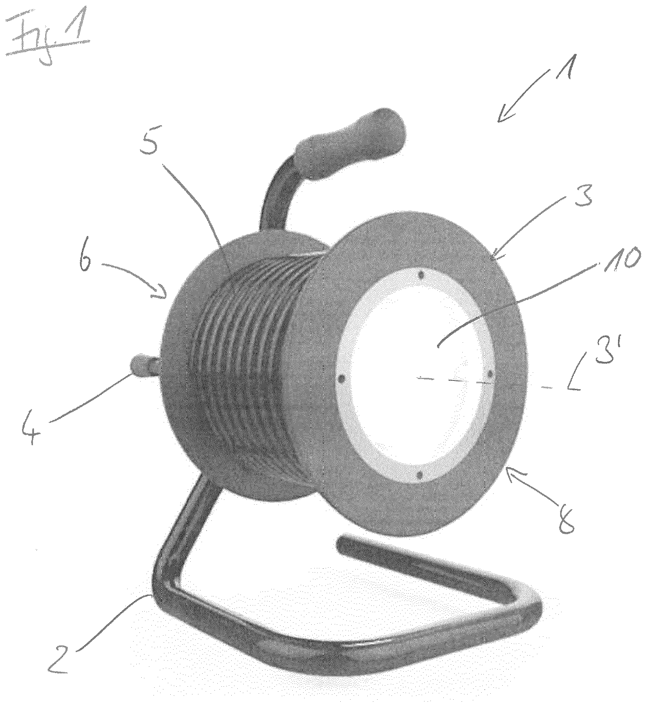

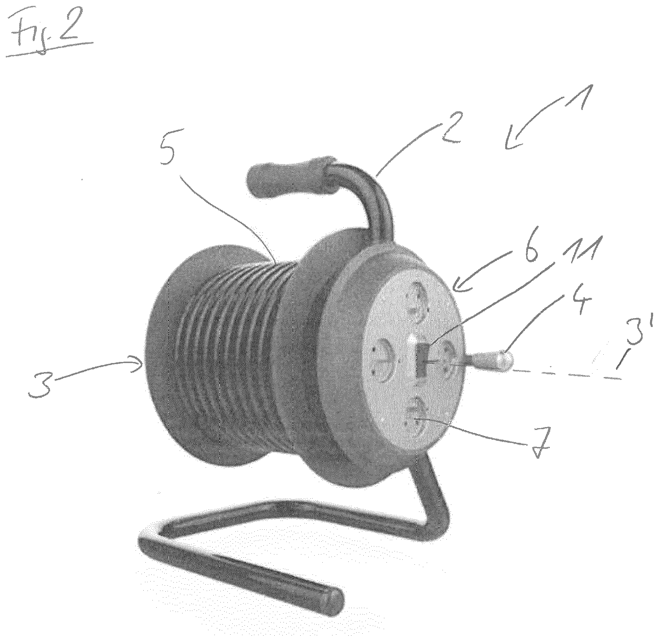

In Figuren 1 und 2 ist ein Leitungsroller 1 gezeigt.

Der Leitungsroller 1 umfasst eine gegenüber einem Dreiecksständer 2 drehbar um eine Achse 3' gelagerte Trommel 3 mit Handgriff 4 zum Aufrollen einer elektrischen Verlängerungsleitung 5. Die Verlängerungsleitung 5 ist mit ihrem einem Ende fest mit der Trommel 3 verbunden und weist an ihrem freien Ende einen SchuKo-Stecker (nicht dargestellt) auf.

Auf der einen Stirnseite 6 weist der Leitungsroller 1 mehrere als SchuKo-Steckdosen ausgestaltete Kupplungen 7 auf. Die Kupplungen 7 sind elektrisch mit der Verlängerungsleitung 5 verbunden, sodass an den Kupplungen 7 angeschlossene Geräte über die Verlängerungsleitung 5 mit elektrischer Energie versorgt werden können.

Auf der gegenüberliegenden Stirnseite 8 ist eine Leuchte 10 fest mit der Trommel 3 des Leitungsroller 1 verbunden. Genauer gesagt, ist die Leuchte 10 in die fragliche Stirnseite 8 eingelassen. Bei der Leuchte 10 handelt es sich um eine gerichtete Lichtquelle mit LEDs als Leuchtmittel. Die Leuchte 10 kann über den an der Stirnseite 6 angeordneten Schalter 11 an- und ausgeschaltet werden.

Grundsätzlich kann die Leuchte 10 über die Verlängerungsleitung 5 mit elektrischer Energie versorgt werden. Zusätzlich weist die Leuchte 10 aber auch noch einen, über die Verlängerungsleitung 5 aufladbaren Energiespeicher (nicht dargestellt) auf, sodass die Leuchte 10 zumindest für einen gewissen Zeitraum auch dann betrieben werden kann, wenn über die Verlängerungsleitung 5 kein Strom fließt.

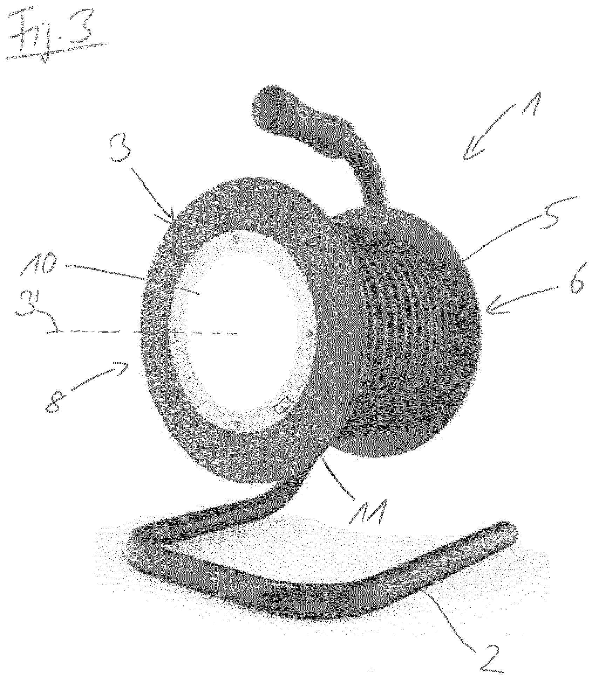

In Figuren 3 bis 5 ist ein zweites Ausführungsbeispiel eines erfindungsgemäßen Leitungsrollers 1 in verschiedenen Ansichten dargestellt. Der Leitungsroller 1 entspricht dabei in weiten Teilen demjenigen aus Figur 1 und 2, weshalb auf die dortigen Ausführungen verwiesen wird. Im Folgenden wird lediglich auf die Unterscheide zwischen den beiden Ausführungsbeispielen eingegangen.

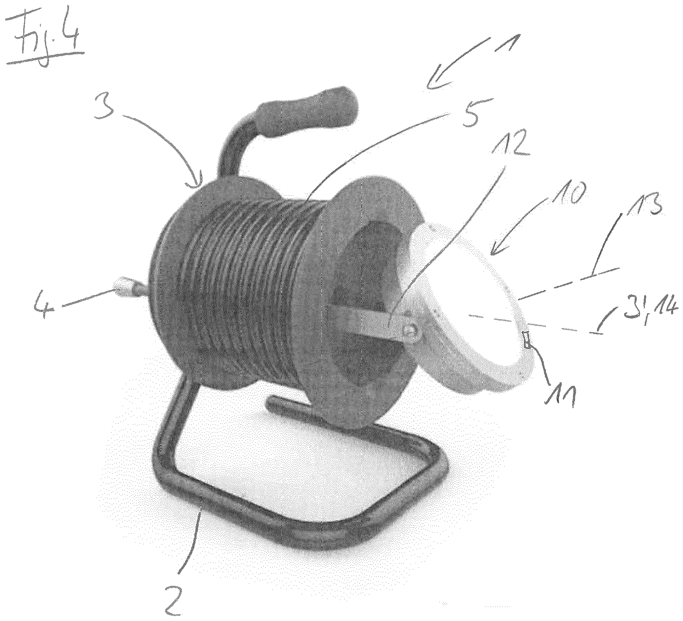

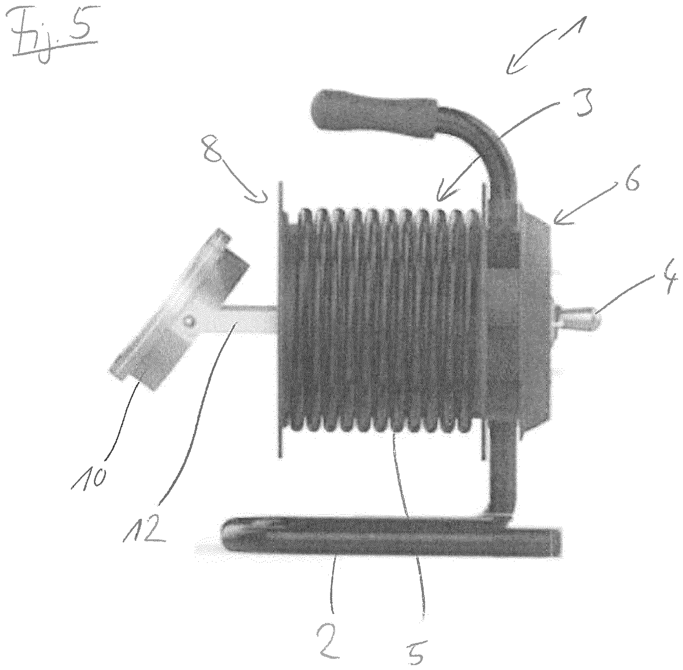

Bei dem Leitungsroller 1 gemäß Figuren 3 bis 5 ist die Leuchte 10 über einer Halterung 12 an dem Leitungsroller 1 befestigt. Die Halterung 12 ist dabei so ausgestaltet, dass die Leuchte 10 mitsamt der Halterung 12 ausgehend von der in Figur 3 gezeigten Position in Richtung der Achse 3' der Trommel 3 herausgezogen werden kann (vgl. Figuren 4 und 5). Darüber hinaus ermöglicht die Halterung 12 noch ein Verschwenken der Leuchte 10 um eine Achse 13, die senkrecht zur Achse 3' der Trommel 3 verläuft.

Die Halterung 12 und somit auch die Lampe 10 sind von der Drehbewegung der Trommel 3 entkoppelt, d.h. auch wenn sich die Trommel 3 dreht, ändert sich die Ausrichtung der Leuchte 10 dadurch nicht. Allerdings sind Halterung 12 und Lampe 10 gesondert um eine Achse 14 kongruent zur Achse 3' drehbar, sodass sich die Leuchte 10 in nahezu beliebiger Richtung ausrichten lässt.

Zur Versorgung der Leuchte 10 mit aus der Verlängerungsleitung 5 stammender elektrischer Energie sind in die Halterung 12 geeignete Stromführungskabel integriert (nicht dargestellt). Auch in diesem Ausführungsbeispiel umfasst der Leitungsroller 1 einen aufladbaren Energiespeicher (nicht dargestellt) und einen Schalter 11 zum An- und Ausschalten der Leuchte 10, der unmittelbar an der Leuchte 10 angeordnet ist.

## Patentansprüche

1. Leitungsroller (1) mit einer drehbar gelagerten Trommel (3) zum Aufrollen einer elektrischen Verlängerungsleitung (5), welche mit einem Ende fest mit der Trommel (3) verbunden ist und die an ihrem freien Ende einen Stecker aufweist, wobei an dem Leitungsroller (1) wenigstens eine mit der Verlängerungsleitung (5) verbundene Kupplung (7) vorgesehen ist, und
wobei wenigstens eine Kupplung (7) an einer ersten Stirnseite (6) des Leistungsrollers (1) angeordnet ist und an der gegenüberliegenden Stirnseite (8) eine unlösbar oder lösbar mit dem Leitungsroller (1) verbundene Leuchte (10) vorgesehen ist, die wenigstens im mit dem Leitungsroller (1) verbundenen Zustand über die Verlängerungsleitung (5) mit elektrischer Energie versorgbar ist,
wobei die Leuchte (10) mit einer Halterung (12) an dem Leitungsroller (1) befestigt ist, die im eingefahrenen Zustand der Leuchte (10) nicht aus dem Leitungsroller (1) hervorsteht und ein Herausziehen der Leuchte (10) aus dem Leitungsroller (1) in Richtung der Achse (3') der Trommel (3) und ein Verschwenken der Leuchte (10) um wenigstens eine Achse (13) senkrecht zur Achse (3') der Trommel (3) ermöglicht, wobei die Leuchte (10) auch im herausgezogenen Zustand weiterhin über die Verlängerungsleitung (5) mit elektrischer Energie versorgbar ist.

2. Leitungsroller nach einem der vorhergehenden Ansprüche, wobei die Leuchte (10) und/oder die Halterung (12) von der Drehbewegung der Trommel (3) entkoppelt und vorzugsweise um eine Achse (14) parallel zur Achse (3') der Trommel (3) drehbar ist.

3. Leitungsroller nach einem der vorhergehenden Ansprüche, wobei die Leuchte (10) über ein Verbindungskabel, Verbindungspins und/oder Induktionsspulen mit elektrischer Energie versorgbar ist.

4. Leitungsroller nach einem der vorhergehenden Ansprüche, wobei die Leuchte (10) einen aufladbaren Energiespeicher zur Speicherung elektrischer Energie aufweist.

5. Leitungsroller nach einem der vorhergehenden Ansprüche, wobei die Leuchte (10) einen Schalter (11) zum Ein- und Ausschalten aufweist, der vorzugsweise unmittelbar an der Leuchte (10) selbst angeordnet ist.

6. Leitungsroller nach einem der vorhergehenden Ansprüche, wobei der Leitungsroller (1) ein Netzteil und wenigstens einen darüber mit elektrischer Energie versorgbare Kupplung, vorzugsweise eine USB-Kupplung, aufweist.

## Claims

1. Cable reel (1) with a rotatably mounted drum (3) for winding up an electrical extension cable (5) which, by way of one end, is permanently connected to the drum (3) and, at its free end, has a plug,
wherein at least one coupling (7), which is connected to the extension cable (5), is provided on the cable reel (1), and
wherein at least one coupling (7) is arranged on a first end side (6) of the power reel (1) and a lamp (10), which is non-releasably or releasably connected to the cable reel (1) and can be supplied with electrical energy via the extension cable (5) at least in the state in which it is connected to the cable reel (1), is provided on the opposite end side (8),
wherein the lamp (10) is fastened to the cable reel (1) by way of a holder (12) which, in the extended state of the lamp (10), does not protrude out of the cable reel (1) and allows the lamp (10) to be pulled out of the cable reel (1) in the direction of the axis (3') of the drum (3) and allows the lamp (10) to be pivoted about at least one axis (13) perpendicular to the axis (3') of the drum (3), wherein the lamp (10) can furthermore be supplied with electrical energy via the extension cable (5) in the pulled-out state too.

2. Cable reel according to one of the preceding claims,
wherein the lamp (10) and/or the holder (12) are/is uncoupled from the rotational movement of the drum (3) and preferably can rotate about an axis (14) parallel to the axis (3') of the drum (3).

3. Cable reel according to either of the preceding claims, wherein the lamp (10) can be supplied with electrical energy via a connecting cable, connecting pins and/or induction coils.

4. Cable reel according to one of the preceding claims,
wherein the lamp (10) has a chargeable energy store for storing electrical energy.

5. Cable reel according to one of the preceding claims,
wherein the lamp (10) has a switch (11) for switch-on and switch-off operations, which switch is preferably arranged directly on the lamp (10) itself.

6. Cable reel according to one of the preceding claims,
wherein the cable reel (1) has a power supply unit and at least one coupling which can be supplied with electrical energy via the said power supply unit, preferably a USB coupling.

## Revendications

1. Enrouleur de câble (1) comprenant un tambour (3) monté à rotation et destiné à enrouler une rallonge électrique (5) qui est reliée de manière fixe par une extrémité au tambour (3) et qui comporte un connecteur à son extrémité libre,
au moins un accouplement (7) relié à la rallonge (5) étant prévu sur l'enrouleur de câble (1), et
au moins un accouplement (7) étant disposé sur une première face frontale (6) de la rallonge électrique (1) et une lampe (10) reliée de manière inamovible ou amovible à l'enrouleur de câble (1) est prévue sur la face frontale opposée (8), laquelle lampe peut être alimentée en énergie électrique par le biais de la rallonge (5) au moins lorsqu'elle est reliée à l'enrouleur de câble (1),
la lampe (10) étant fixée à l'enrouleur de câble (1) à l'aide d'un support (12) qui ne fait pas saillie de l'enrouleur de câble (1) lorsque la lampe (10) est rétractée et la lampe (10) pouvant être retirée de l'enrouleur de câble (1) dans la direction de l'axe (3') du tambour (3) et la lampe (10) pouvant pivoter sur au moins un axe (13) perpendiculairement à l'axe (3') du tambour (3), la lampe (10) pouvant encore être alimentée en énergie électrique par le biais de la rallonge (5) même lorsqu'elle est retirée.

2. Enrouleur de câble selon l'une des revendications précédentes, la lampe (10) et/ou le support (12) étant découplés du mouvement de rotation du tambour (3) et pouvant de préférence tourner sur un axe (14) parallèlement à l'axe (3') du tambour (3).

3. Enrouleur de câble selon l'une des revendications précédentes, la lampe (10) pouvant être alimentée en énergie électrique par le biais d'un câble de liaison, de broches de liaison et/ou de bobines d'induction.

4. Enrouleur de câble selon l'une des revendications précédentes, la lampe (10) comportant un accumulateur d'énergie rechargeable destiné à accumuler de l'énergie électrique.

5. Enrouleur de câble selon l'une des revendications précédentes, la lampe (10) comportant un commutateur (11) destiné à l'allumer et l'éteindre, lequel commutateur est de préférence disposé directement au niveau de la lampe (10) elle-même.

6. Enrouleur de câble selon l'une des revendications précédentes, l'enrouleur de câble (1) comportant un bloc d'alimentation et au moins un accouplement, de préférence un accouplement USB, pouvant être alimenté en énergie électrique par le biais dudit bloc d'alimentation.
